# FASCICULE DE BREVET EUROPEEN

(11) **EP 2 041 735 B1**
(45) Date de publication et mention de la délivrance du brevet: **14.09.2011**
(21) Numéro de dépôt: 07789473.1
(22) Date de dépôt: 03.07.2007
(51) Int. Cl.: G08C 17/02, H04B 17/00, H04L 12/28

(54) **PROCEDE DE COMMUNICATION PAR RADIOFREQUENCES DANS UNE INSTALLATION DOMOTIQUE**
VERFAHREN ZUR KOMMUNIKATION DURCH HOCHFREQUENZEN IN EINER HAUSAUTOMATISIERUNGSINSTALLATION
METHOD OF COMMUNICATING BY RADIO FREQUENCIES IN A HOME-AUTOMATION INSTALLATION

(30) Priorité: 03.07.2006 FR 0605994
(43) Date de publication de la demande: 01.04.2009
(73) Titulaire: Somfy S.A.S., 74300 Cluses (FR)
(72) Inventeur: ROUSSEAU, Fabien, 74300 Cluses (FR)
(74) Mandataire: Bugnion Genève
(86) Numéro de dépôt international: PCT/IB2007/001831
(87) Numéro de publication internationale: WO 2008/004085

(56) Documents cités:
- EP-A1- 1 333 706
- WO-A-03/094564
- US-A1- 2005 185 737

## Description

L'invention concerne le domaine des systèmes de commande domotique permettant de piloter le mouvement d'ouvrants de la maison, comme par exemple des volets, portes, fenêtres, portes de garage, portails, écrans ou protections solaires diverses.

Ces systèmes de commande comportent généralement des points de commande, nomades ou fixes, et des actionneurs, permettant de provoquer le mouvement des ouvrants de la maison.

Les points de commande présentent généralement une interface utilisateur, plus ou moins évoluée, permettant à un utilisateur d'envoyer des ordres de commande vers les actionneurs. L'interface peut ainsi comprendre des boutons poussoirs de commande d'ouverture, de fermeture, ou d'arrêt du mouvement.

Les points de commande peuvent également être des capteurs ou des automatismes, avec ou sans interface utilisateur.

Dans une telle installation domotique, les ordres de commande sont transmis depuis les points de commande vers les actionneurs de manière filaire ou sans fil, par exemple par ondes radiofréquences.

Dans un système monodirectionnel, les points de commande présentent une fonction d'émission simple, tandis que les actionneurs comprennent un récepteur d'ordres de commande.

Avantageusement, les points de commande sont à la fois émetteurs d'ordres et récepteurs d'information, de même que les actionneurs sont récepteurs d'ordres et émetteurs d'informations. Ainsi, ces éléments communiquent de manière bidirectionnelle.

En particulier dans le cas de communication par radiofréquence, les signaux sont émis sans direction et peuvent être reçus par divers récepteurs à l'écoute. Pour éviter des ordres intempestifs, les signaux sont codés et intègrent des identifiants (celui de l'émetteur et/ou du récepteur), qui permettent de définir d'où vient le message et/ou à qui il s'adresse.

De plus en plus, de telles installations intègrent des actionneurs autonomes, c'est-à-dire non connectés à une source d'alimentation par le secteur. Le problème lié à l'autonomie dans le cadre d'une communication sans fil est celui de la consommation d'énergie. Pour limiter cette consommation, le récepteur de l'actionneur n'est actif que pendant de courtes périodes de temps, pendant lesquelles il écoute s'il détecte un signal émis, séparées par de longues périodes de temps pendant lesquelles il est inactif.

Les périodes d'activité du récepteur doivent être suffisamment longues pour détecter au moins une portion de signal. Si tel est le cas, le récepteur reste à l'écoute, c'est-à-dire activé, jusqu'à entendre une trame complète et pouvoir réagir éventuellement à celle-ci. Si le niveau de puissance du signal est suffisamment élevé, le récepteur active son microprocesseur et analyse le signal. Un point de commande émettant le signal doit par conséquent émettre une série de signaux, de manière à s'assurer d'être entendu par le récepteur.

Le problème d'une telle installation est lié à l'environnement dans lequel elle se trouve. En effet, notamment sur certaines fréquences radio (par exemple 433.42 MHz), les perturbations peuvent être nombreuses. Cette fréquence est en effet utilisée par divers équipements électroniques (stations météo, casques audio sans fil, etc) qui émettent des signaux régulièrement voire quasiment en continu pendant certains laps de temps. Bien que ces signaux comprennent a priori des trames non identiques à celles du protocole utilisé pour la communication entre le point de commande et l'actionneur, elles génèrent des réveils intempestifs et des analyses non nécessaires qui entraînent une consommation énergétique non nécessaire au niveau du récepteur de l'actionneur.

Par ailleurs, il est possible qu'il y ait dans l'environnement du système, d'autres émetteurs utilisant le même protocole pour s'adresser à d'autres récepteurs. Ces autres émetteurs ne sont donc pas appairés au récepteur de l'actionneur, c'est-à-dire qu'il n'y a pas eu échange préalable d'un identifiant entre l'émetteur et le récepteur. C'est par exemple le cas d'un capteur de vent voisin de l'installation qui émet régulièrement des signaux à l'attention d'un autre actionneur avec lequel il est appairé, dans le cadre de son fonctionnement normal (ce fonctionnement permet de s'assurer, notamment dans le cadre d'un capteur lié à une fonction de sécurisation du produit à actionner, que le capteur est bien dans un état opérationnel).

On estime à 25% la sur-consommation générée au niveau du récepteur par un capteur non appairé mais émettant selon le même protocole des trames signifiant son bon état de fonctionnement (4 salves de 5 trames) toutes les 15 minutes.

Pour remédier partiellement à ce problème de perturbations et de réveils intempestifs, une première solution est généralement mise en oeuvre : Un premier niveau de filtrage des signaux reçus par le récepteur consiste à mesurer leur niveau de puissance. Si la puissance d'un signal est en deçà d'un seuil prédéterminé, le signal n'est pas traité et le récepteur se rendort immédiatement. Un indicateur de puissance du signal est communément appelé RSSI (Received Signal Strength Indicator). Le récepteur reçoit un signal émis par un émetteur, génère une mesure équivalente au RSSI de ce signal (indicative du niveau de puissance de ce signal) et ne traite ce signal que si la mesure est supérieure au seuil prédéterminé.

Par exemple, dans le document US 2005/0185737, on utilise un récepteur radiofréquence dans lequel on traite les signaux reçus avec une puissance supérieure à un seuil et on ignore les signaux reçus avec une puissance inférieure à ce seuil afin d'économiser l'énergie du récepteur.

Dans le document WO 03/094564, un système comprend plusieurs dispositifs communiquant par radio. Dans ce système, on utilise une mesure de qualité de signaux radio reçus pour déterminer les positions relatives des dispositifs. Afin d'économiser l'énergie, il peut être utilisé une mesure de puissance de signal reçu pour déterminer si un dispositif fonctionne correctement ou si un dispositif a été déplacé. Ainsi, un signal reçu avec un niveau de puissance inhabituel peut être ignoré dans une procédure de détermination de position.

Des systèmes de mesure du RSSI sont connus, par exemple dans des systèmes d'alarme pour vérifier le bon fonctionnement du système, et décrits notamment dans les documents US 6,150,936 ou US 5,801,626 dont les contenus sont incorporés par référence à la présente demande.

Le but de l'invention est de fournir un procédé de communication obviant aux inconvénients cités précédemment et améliorant les procédés de communication connus de l'art antérieur. L'invention se propose d'améliorer la gestion de signaux parasites reçus par des récepteurs alors qu'ils ne sont pas adressés à ceux-ci, de manière à éviter les réveils intempestifs des moyens de traitement des signaux coûteux en énergie et ceci sans gêner la réception des signaux destinés aux récepteurs.

Le procédé de communication selon l'invention est défini par la revendication 1.

Différents modes d'exécution de l'invention sont définis par les revendications dépendantes 2 à 8.

Un récepteur d'ordres par radiofréquences selon l'invention est défini par la revendication indépendante 9.

Une installation domotique selon l'invention est définie par la revendication indépendante 10.

L'invention se base sur le fait que la plupart des émetteurs perturbant les récepteurs d'un système domotique sont fixes (capteurs fixés au mur ou montés en façade ou sur un toit, stations météo posées sur un meuble), et donc que leur puissance d'émission vue par les récepteurs fixes du système domotique (dont une image peut être constituée par l'indicateur RSSI) est quasiment constante d'une émission à une autre.

Le principe de l'invention consiste à déterminer et enregistrer dans une liste un ou plusieurs niveaux de puissance de signal provoquant chacun un nombre donné de fois, de manière répétée par exemple, le réveil intempestif d'un récepteur, c'est à dire lorsque le récepteur se réveille de manière injustifiée un nombre de fois donné sur ce ou ces niveaux de puissance de signal.

En d'autres mots, un récepteur mesure le niveau de puissance du signal qu'il reçoit. Si ce niveau de puissance n'est pas enregistré, le récepteur réveille un microprocesseur qui analyse le signal. Dans le cas où le signal ne lui est pas destiné, le récepteur incrémente un compteur.

Au bout d'un nombre déterminé n d'occurrences dans lesquelles un signal d'un même niveau de puissance a provoqué le réveil inutile du microprocesseur, celui-ci conclut que le signal ne lui est pas destiné, le récepteur mémorise le niveau de puissance. On dit que ce niveau de puissance est alors « bloqué » par le récepteur. Par la suite, lorsqu'un signal ayant ce niveau de puissance sera reçu par le récepteur, le microprocesseur ne sera pas réveillé pour l'analyser et le récepteur se rendormira aussitôt. L'émission de ce signal sera alors quasiment transparente vis-à-vis de ce récepteur.

Plusieurs niveaux de puissance peuvent être bloqués si nécessaire.

Le risque qu'un émetteur nomade ou fixe destiné à communiquer avec un récepteur et utilisé dans une zone telle que le niveau de puissance des signaux qu'il émet soit bloqué au niveau du récepteur existe. Diverses solutions peuvent alors être mises en oeuvre pour remédier à ce problème. Celles-ci peuvent naturellement être combinées.

Le récepteur peut construire une liste A de niveaux de signaux de puissance à ne pas bloquer. Cette liste A peut être construite au fur et à mesure de l'utilisation du système émetteur-récepteur. Chaque fois qu'un émetteur de l'installation émet un signal, le récepteur mesure son niveau de puissance avant d'analyser le contenu du signal. Si ce signal lui est adressé, il ajoute le niveau de puissance mesuré à la liste A.

Lorsqu'un niveau de puissance de signal est sur le point d'être bloqué, le récepteur vérifie si le niveau à bloquer est contenu dans la liste A. Si tel est le cas, on peut prévoir soit que le niveau ne soit pas bloqué, soit que le nombre d'occurrences de réception d'un signal ayant ce niveau de puissance pour le blocage soit augmenté.

Cette solution permet de s'affranchir des inconvénients lorsqu'un installateur ajoute au système une télécommande fixe appairée qui émet malencontreusement des signaux ayant la même puissance qu'un autre émetteur étranger au système et dont les signaux doivent être autant que possible ignorés par les récepteurs du système.

Une procédure de réinitialisation peut être mise en place pour éviter qu'un niveau de puissance ne reste bloqué indéfiniment, par exemple lors de la réception et de l'analyse d'un signal correctement adressé (ou plusieurs). En particulier dans ce cas, il est intéressant de mémoriser si cela est possible, l'identifiant de l'émetteur (non appairé et émettant des signaux perturbants) correspondant au niveau bloqué. De cette manière, lors d'une nouvelle constatation d'un signal perturbant par le récepteur, il est possible de comparer le niveau de puissance mesuré avec l'ancien niveau de puissance mis en mémoire et correspondant au même identifiant. De cette manière, le récepteur peut bloquer plus rapidement ce niveaux et/ou ajuster de manière dynamique le niveau de puissance à bloquer (adaptation aux variations d'un niveau de puissance de signal dans le temps par exemple).

Une autre solution à mettre en oeuvre dans le cadre de l'invention consiste à prévoir un émetteur nomade dont le niveau de puissance d'émission puisse être ajusté, que ce soit à l'intérieur d'une série de trames ou de façon temporaire ou fixe, par l'action de l'utilisateur par exemple. Cette solution permet de réduire au maximum les risques d'un blocage intempestif et est applicable notamment pour un émetteur spécifique pour la commande d'un actionneur autonome.

Les critères pour la sélection d'un niveau de puissance à bloquer sont les suivants :
- le protocole n'est pas reconnu (trame différente ou non décodable),
- l'émetteur n'est pas identifié comme faisant partie de l'installation (non appairé, identifiant inconnu),
- un calcul de vérification (somme de contrôle c'est-à-dire checksum ou CRC) de la trame est faux.

Chaque critère peut être traité différemment, c'est-à-dire que le nombre d'occurrence de l'événement conduisant au blocage peut être adapté en fonction du ou des critères identifiés précédemment.

Le format de la trame est dépendant du protocole de communication utilisé. Si d'autres éléments dans l'environnement de l'installation décrite émettent des signaux sur une même fréquence radio, il est possible de détecter rapidement que le format de trame est différent et de rejeter ces trames sans les analyser. Cependant, l'objet de l'invention s'applique également à la détection de signaux intempestifs d'un autre protocole. En effet, la mesure du niveau de puissance du signal reçu est la première action effectuée par le récepteur à son réveil, avant même de lire les bits de la trame de ce signal. Quel que soit le signal reçu, l'invention permet donc de déterminer le plus rapidement possible si un signal reçu est à analyser.

Plusieurs compteurs pourront être mis en oeuvre selon les critères de blocage déterminés et des seuils de blocage pourront être définis en fonction de ces critères.

La périodicité d'émission d'un signal perturbant peut également être prise en compte pour la détermination du blocage d'un niveau de puissance. En particulier, comme décrit dans l'exemple du capteur de vent voisin, si un signal perturbant est régulièrement réémis, il peut être plus rapidement considéré comme perturbant et le niveau de puissance de ce signal bloqué. Parallèlement, si un signal perturbant est reçu plusieurs fois pendant un laps de temps très court, le blocage du niveau de puissance peut également être mis en oeuvre plus rapidement.

Alternativement, si un signal perturbant régulier est détecté, des procédures de détermination de la fréquence et de blocage de la réception sur ce niveau de puissance à cette fréquence déterminée peuvent être mises en oeuvre (une horloge de réveil régulier du récepteur étant active).

Le dessin annexé représente, à titre d'exemple, une installation domotique selon l'invention et un procédé de communication selon l'invention.
La figure 1 est un schéma d'une installation domotique selon l'invention.
La figure 2 est un ordinogramme illustrant une procédure de discrimination de signaux selon l'invention.
Les figures 3a, 3b, 4 et 6 sont des ordinogrammes illustrant différentes variantes de procédures de passage en mode de sommeil d'un récepteur d'ordres.
La figure 5 est un ordinogramme illustrant une procédure d'enregistrement d'un niveau de puissance de signal ne pouvant être ignoré par un récepteur d'ordres.
La figure 7 est un diagramme illustrant les variations de puissance d'émission d'un émetteur d'ordres.

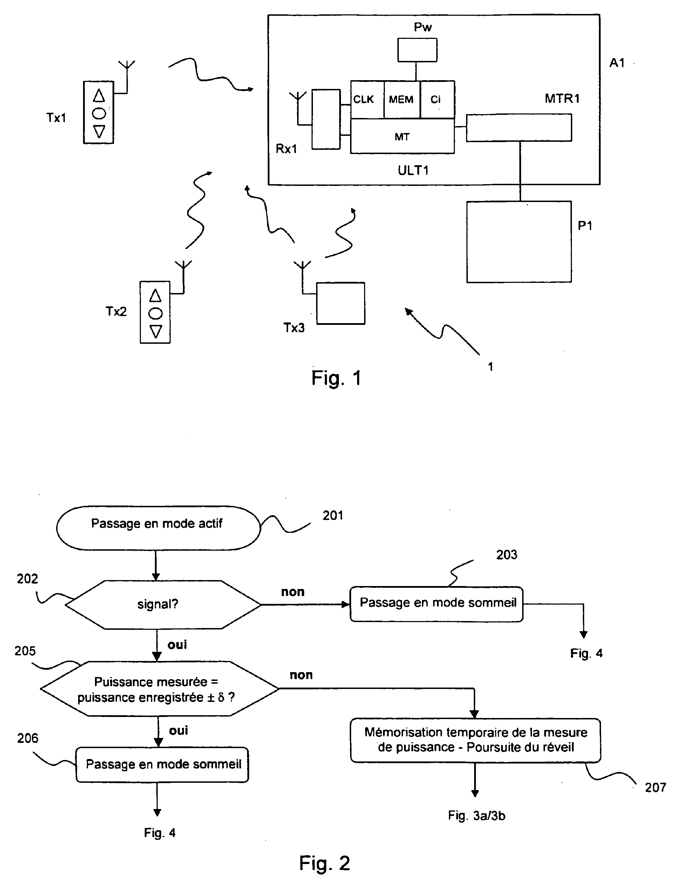

La figure 1 représente une installation 1 comprenant un émetteur Tx1 portable, capable de communiquer avec un récepteur Rx1. L'installation comprend également une unité électronique de traitement ou unité logique de traitement ULT1. Celle-ci pilote un ensemble motoréducteur MTR1, qui entraîne le mouvement d'un écran P1 tel que notamment un store ou un volet roulant. L'unité électronique de traitement ULT1 et le récepteur Rx1 sont compris dans un actionneur A1. L'énergie nécessaire au fonctionnement des différents composants de l'actionneur est fournie par une alimentation Pw, indépendante du secteur. Cette alimentation peut comprendre un moyen de stockage d'énergie électrique, rechargeable par énergie solaire par exemple. Dans la mesure où l'actionneur A1 est alimenté indépendamment du courant secteur, il est dit autonome. Dans un tel actionneur, la gestion de l'énergie et de la consommation d'énergie est particulièrement critique. L'élément A1 pourrait être un autre type de récepteur d'ordres. L'actionneur A1 (encore appelé récepteur d'ordres) comprend des moyens logiciels permettant de régir son fonctionnement conformément au procédé selon l'invention. Ces moyens logiciels comprennent par exemples des programmes exécutés par l'unité logique de traitement (ULT1).

L'unité logique de traitement ULT1 comprend plusieurs composants tels que notamment un microprocesseur, une horloge CLK, une mémoire MEM, un ou plusieurs compteurs Ci et des moyens MT de traitement des informations reçues du récepteur Rx1 permettant notamment de déclencher l'alimentation complète de l'unité logique de traitement.

Le récepteur radiofréquences Rx1 utilise donc au moins une partie des ressources de l'unité logique de traitement ULT1 pour le traitement des signaux.

L'émetteur Tx1 est destiné à envoyer des ordres de commande de mouvement de l'écran, par l'intermédiaire de l'ensemble motoréducteur MTR1, de l'unité électronique qui le pilote et du récepteur Rx1 qui reçoit ces ordres de commande.

L'émetteur Tx1 et le récepteur Rx1 ont préalablement échangé une information les caractérisant, par exemple un identifiant de l'émetteur ou du récepteur. Cette configuration préalable est dite appairage. Le récepteur Rx1 est donc capable de reconnaître un signal en provenance de l'émetteur Tx1, de décoder celui-ci et donc d'en comprendre le contenu.

Si l'émetteur Tx1 émet un signal alors qu'il se trouve trop loin du récepteur Rx1, la puissance du signal émis est trop faible et le récepteur Rx1 ne traite pas l'ordre de commande. Si l'émetteur Tx1 est utilisé dans une zone de réception du récepteur Rx1, celui-ci est capable de recevoir le signal, de l'analyser et de provoquer la mise en oeuvre de l'ordre émis dans le signal.

Le récepteur Rx1 n'est pas à l'écoute d'un signal en permanence. Il est piloté par l'unité électronique de traitement ULT1 et plus précisément par l'horloge CLK de manière à être actif, c'est-à-dire à l'écoute d'un signal, pendant des périodes très courtes espacées dans le temps (par exemple le récepteur est à l'écoute d'un signal pendant 1 ms toutes les 60 ms). Parallèlement, l'émetteur Tx1 émet lorsqu'il est activé, un signal de commande sous forme d'une trame répétée plusieurs fois consécutivement avec des silences inter-trames de séparation.

Les périodes d'écoute, dites aussi d'état actif ou de réveil, sont déterminées de telle manière que le récepteur est capable de déterminer s'il reçoit une portion de signal et si tel est le cas, de rester actif pour entendre une trame complète définissant l'ordre.

Dans l'environnement de l'installation, ont été représentés sur la figure 1 un second émetteur Tx2 ainsi qu'un capteur émetteur Tx3. Ceux-ci ne sont pas appairés avec le récepteur Rx1. mais ce dernier est capable d'entendre les signaux émis par ces autres émetteurs, utilisés dans une installation voisine et utilisant le même protocole de communication.

Le récepteur et l'unité électronique de traitement comprennent des moyens pour déterminer un niveau de puissance d'un signal reçu. Préférentiellement, ces moyens permettent de calculer un indicateur RSSI. Ils comprennent également des moyens pour bloquer l'analyse ou le traitement d'un signal si celui-ci a un niveau de puissance sensiblement égal au niveau déterminé. L'abandon de l'analyse du signal correspond à un passage en état inactif de l'unité logique de traitement ULT1 et du récepteur Rx1.

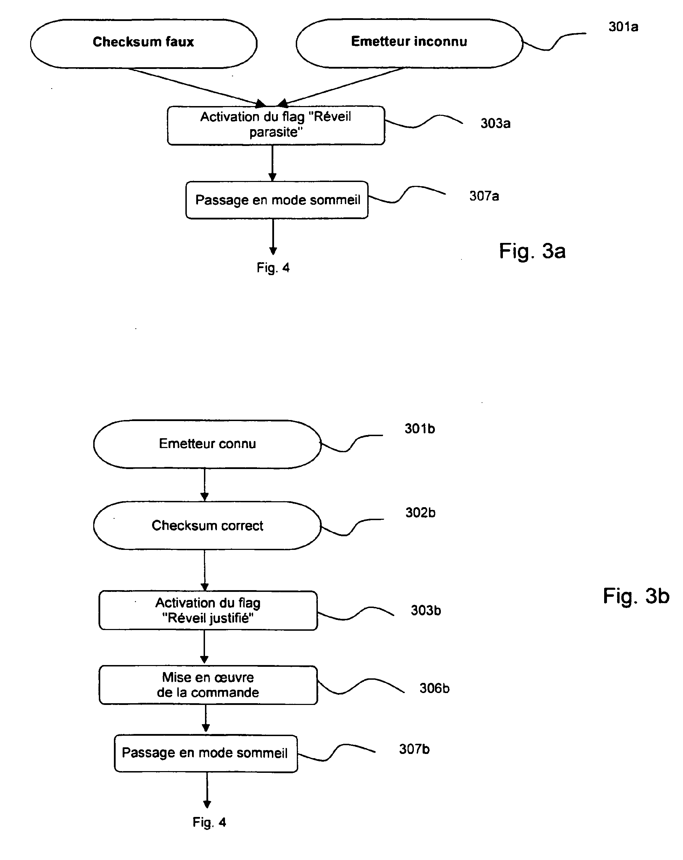

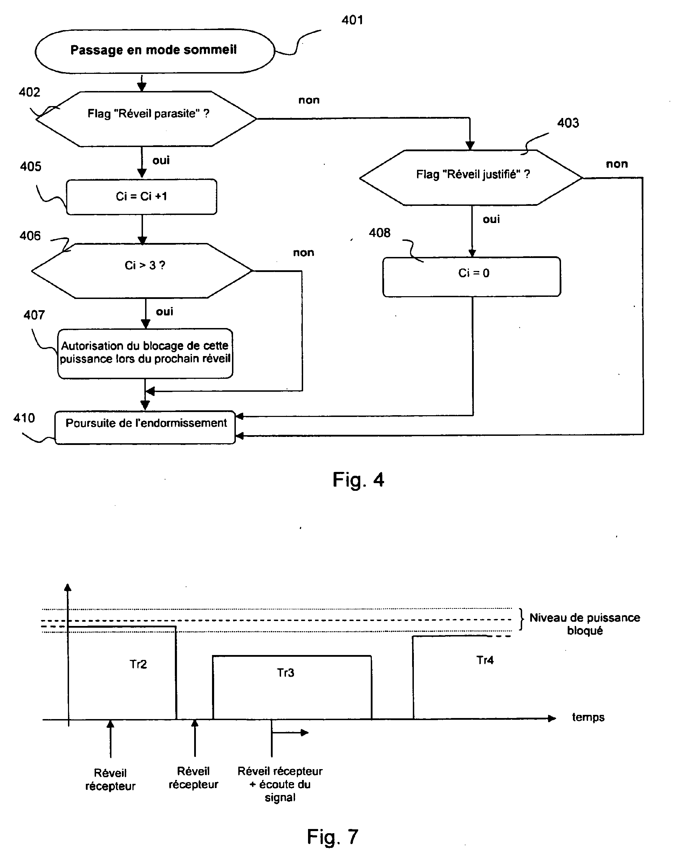

La figure 2 illustre une phase du procédé de communication lorsque le récepteur Rx1 se réveille ou entre en mode actif dans une étape 201. Dans une étape 202, le récepteur teste s'il reçoit un signal. Si tel n'est pas le cas, le récepteur passe de nouveau en mode sommeil dans une étape 203. Le procédé se poursuit alors comme décrit plus bas en référence à la figure 4. Si le récepteur reçoit un signal à l'étape 202, il passe à une étape 205 dans laquelle il mesure le niveau de puissance de ce signal et détermine si celui-ci correspond sensiblement à un niveau de puissance précédemment déterminé et stocké en mémoire comme un niveau de puissance bloqué. Si tel est le cas, le récepteur bascule immédiatement dans le mode sommeil dans une étape 206. Si tel n'est pas le cas, le récepteur reste en mode actif et le niveau de puissance est temporairement enregistré en mémoire. Le procédé se poursuit alors comme décrit plus bas en référence aux figures 3a/3b. Il n'est pas nécessaire que le niveau de puissance soit strictement égal au niveau bloqué enregistré en mémoire pour l'étape 206 soit réalisée. En effet, on tolère une certaine variation de la valeur du niveau de puissance, un certain nombre de conditions extérieures pouvant avoir un impact sur le niveau de puissance mesuré. De préférence, un niveau de puissance mesuré variant de plus ou moins 4% par rapport au niveau de puissance enregistré est considéré comme étant égal au niveau de puissance enregistré. On peut aussi choisir une plage définie comme plus ou moins 5 ou 6 % autour du niveau de puissance enregistré. De même, on peut définir une plage de plus ou moins 3 dB autour du niveau de puissance enregistré. Ces plages peuvent notamment être adaptées en fonction des moyens de mesure de puissance utilisés.

Les figures 3a et 3b illustrent une partie de l'analyse du signal reçu par le récepteur Rx1. Plusieurs critères peuvent être analysés, dont parmi eux, l'identifiant de l'émetteur ou le calcul de vérification (somme de contrôle).

La figure 3a montre que si, dans une étape 301a, l'un ou l'autre de ces critères est faux (la somme de contrôle calculée à partir de la trame reçue ne correspond pas à la somme de contrôle émise dans cette trame, ou l'émetteur ne fait pas partie des émetteurs appairés au récepteur Rx1), le récepteur Rx1 détermine qu'il s'agit d'un réveil parasite et déclenche, dans une étape 303a, le basculement temporaire d'un indicateur de réveil parasite.

Le récepteur passe alors de nouveau en mode sommeil dans une étape 307a. La suite du procédé est représentée à la figure 4.

Dans le cas de la figure 3b, l'identifiant de l'émetteur est reconnu dans une étape 301 b et la somme de contrôle vérifiée dans une étape de test 302b est correcte. Il s'agit alors d'un réveil justifié et le récepteur Rx1 déclenche, dans une étape 303b, le basculement temporaire d'un indicateur de réveil justifié. Cette procédure sert par exemple si l'on veut pouvoir réinitialiser le blocage d'un niveau de puissance de signal lors d'une réception d'un signal identifié (pour ne pas bloquer un niveau de puissance indéfiniment). D'autres méthodes pour parvenir à cette réinitialisation peuvent évidemment être mises en oeuvre.
Dans ce cas, de plus, le signal est traité par le récepteur et une action correspondant au signal est éventuellement mise en oeuvre par le récepteur.

Lorsque le signal a été identifié, l'actionneur A1 exécute la commande requise dans une étape 306b, et le récepteur Rx1 bascule à nouveau dans un état de sommeil, dans une étape 307b. La suite du procédé est représentée à la figure 4.

La figure 4 illustre les étapes mises en oeuvre lors du basculement en mode sommeil du récepteur. Ces étapes sont mises en oeuvre quel que soit le temps passé par le récepteur dans un état actif. Alternativement, un basculement immédiat dans un mode de sommeil sans analyse des indicateurs dans le cas où aucun signal n'a été reçu pendant la période de réveil sera préféré.

Lors du basculement en mode de sommeil, l'unité électronique de traitement teste, dans une étape 402, l'état de l'indicateur de réveil parasite. Si celui-ci est actif, prouvant que le dernier signal reçu était un signal parasite, un compteur Ci, lié au niveau de puissance mémorisé temporairement à l'étape 207 est incrémenté dans une étape 405. Une fois lu, l'indicateur est inactivé. Lorsque la valeur de ce compteur Ci dépasse un seuil prédéterminé, par exemple 3, le niveau de puissance mis temporairement en mémoire lors de l'étape 207 est enregistré en mémoire comme un niveau de puissance bloqué dans une étape 407. Lors des prochains réveils, les niveaux de puissance des signaux reçus seront comparés à ce nouveau niveau bloqué.

Enfin, dans une étape 410, le récepteur est à nouveau plongé dans un état de sommeil.

L'état du compteur Ci peut être utilisé lors d'une opération de maintenance, il permet en effet de comptabiliser les signaux parasites. Si le procédé comprend une étape de réinitialisation du compteur Ci, il est également possible de dissocier un compteur total de signaux parasites et un compteur réinitialisé.

Dans le cas d'une réinitialisation du blocage, l'unité électronique de traitement lit ou teste, dans une étape 403, l'état de l'indicateur de réveil justifié. Si celui-ci est actif, montrant qu'un signal a pu être identifié et traité; le compteur Ci de blocage du dernier niveau de signal, ou l'ensemble des compteurs Ci de blocage, est réinitialisé dans une étape 408. De même que pour l'indicateur de réveil parasite, l'indicateur de réveil justifié est inactivé une fois lu.

Enfin, le récepteur est à nouveau plongé dans un état de sommeil à l'étape 410.

Par contre, si dans l'étape de test 403, cet indicateur n'est pas actif (par exemple dans le cas où le dernier signal reçu était émis avec un niveau de puissance bloqué et donc écarté par le récepteur), le récepteur est plongé dans un état de sommeil à l'étape 410.

La réinitialisation des blocages permet d'éviter qu'un niveau de puissance ne reste bloqué indéfiniment. En revanche, le risque d'un blocage perturbant le fonctionnement de l'installation peut être traité de manière plus fine.

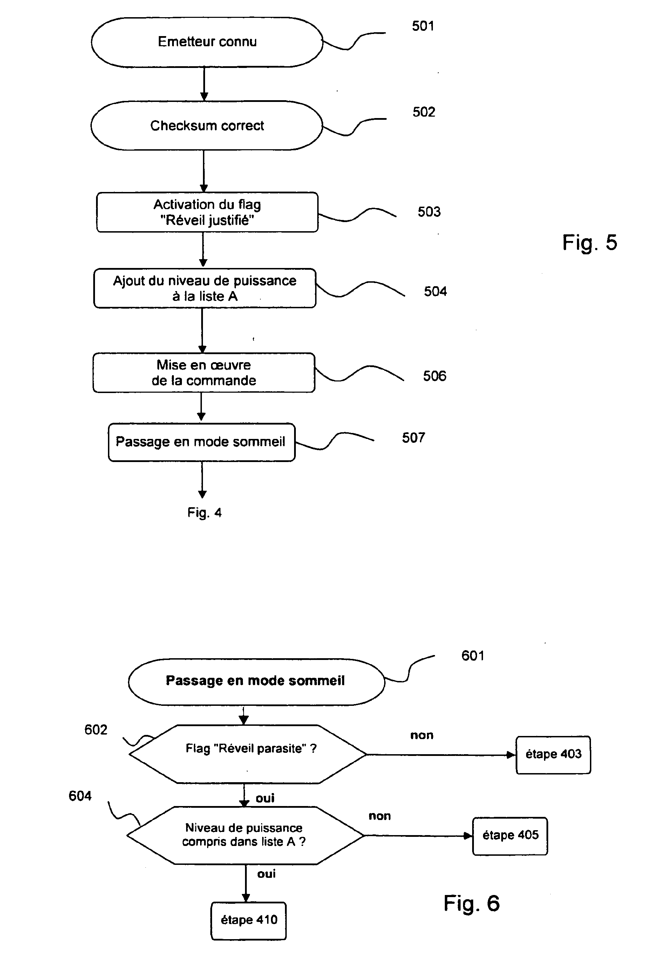

En particulier, ainsi que représenté à la figure 5, le récepteur Rx1 peut établir, de la même manière qu'un niveau mesuré de puissance de signal peut être mis en mémoire comme niveau bloqué, une liste A de niveaux à ne pas bloquer. Ainsi, chaque niveau de puissance mesuré lors de la réception d'un signal est stocké temporairement au cours de l'étape 207. Dans le cas où le signal s'adresse effectivement au récepteur Rx1, le niveau de puissance peut être mémorisé dans une liste A de niveaux à ne pas bloquer lors d'une étape 504. Les étapes 501 à 503 et 506 à 507 sont identiques aux étapes 301 b à 307b décrites en référence à la figure 3b.

La mémorisation définitive peut n'intervenir qu'après la réception d'un certain nombre de signaux correctement adressés sur ce même niveau de puissance.

Alternativement, la réception d'un signal correctement adressé peut décrémenter un compteur Ci associé à ce niveau, ce même compteur Ci pouvant être utilisé pour le comptage des signaux intempestifs pour ce même niveau.

Dans une variante, si un signal correctement identifié est reçu avec un niveau de puissance en voie d'être bloqué (dont le compteur Ci est positif mais inférieur au seuil), un message d'avertissement peut être retourné par le récepteur Rx1. De cette manière, si le signal est émis par un nouveau point de commande en cours d'installation, l'installateur du nouveau point de commande est rapidement averti si un problème se pose dans son installation et peut prendre les mesures nécessaires (modification de l'emplacement du nouveau point de commande, enregistrement du niveau de puissance du nouveau point de commande comme un niveau à ne pas bloquer, etc.).

Une variante de procédure de passage en mode sommeil est décrite en référence à la figure 6. Elle diffère de celle décrite en référence à la figure 4 en ce qu'elle comprend une étape supplémentaire de test 604. Dans cette étape on teste si le niveau de puissance du signal ayant provoqué un réveil intempestif est compris dans la liste A. Si tel est le cas, le récepteur Rx1 bascule directement dans le mode de sommeil dans l'étape 410. Il n'y a alors pas d'incrémentation du compteur Ci de blocage. Si tel n'est pas le cas, on passe à l'étape 405.

Les procédures décrites en référence aux figures 3a et 3b présentent des tests relatifs à une somme de contrôle et à l'identification de l'émetteur. Il va de soi que d'autres critères peuvent être testés, comme par exemple une clé de décryptage, un format de trame, etc. Ces différents critères peuvent être pondérés de différentes manières. En particulier, il sera selon les cas justifié d'accorder plus d'importance à certains critères provoquant des signaux intempestifs, selon le temps d'analyse et donc la consommation d'énergie.

Ainsi, par exemple, dans le cas d'un émetteur de l'installation (appairé) installé en limite de portée et pour lequel les erreurs de transmission des bits de la trame du signal aboutissent à un calcul de vérification (somme de contrôle ou CRC) de la trame faux, une occurrence du phénomène pourra incrémenté le compteur d'un nombre inférieur à 1, par exemple ¼ Le risque de rejet d'un émetteur utilisé en limite de portée sera donc fortement diminué.

Alternativement, la décision de blocage peut intervenir suivant un critère de fréquence de perturbation. L'unité électronique de traitement ULT1 détermine alors un niveau puissance à bloquer et la périodicité d'émission du signal perturbant, de manière à ne bloquer le niveau de puissance que pendant les plages horaires couvrant l'émission régulière de ce signal perturbant.

La figure 2 mentionne une valeur δ définissant une plage autour d'une valeur de puissance bloquée. Ainsi, si la puissance d'un signal est comprise dans cette plage, ce signal n'est pas traité. Le niveau de puissance d'un signal peut en effet être légèrement variable, même pour un émetteur fixe, puisqu'il dépend notamment des conditions d'environnement, de la quantité d'énergie disponible, etc. La valeur δ peut être déterminée de manière fixe.

Avantageusement, cette valeur est déterminée de manière dynamique. En effet, si le récepteur Rx1 mémorise l'identifiant de l'émetteur (non appairé et émettant des signaux perturbants) associé au niveau bloqué, il est possible de déterminer des variations de puissance liée à cet émetteur particulier, notamment lors des premières mesure avant blocage. De ce fait, la valeur δ peut être propre à l'émetteur perturbant le récepteur. Alternativement, c'est la valeur moyenne de puissance bloquée qui est ajustée.

La plage de blocage doit être suffisamment grande pour couvrir les variations de niveau de signaux perturbants, sans toutefois bloquer intempestivement des émetteurs appairés de l'installation.

Si la procédure de blocage est mise en oeuvre en combinaison avec une réinitialisation des niveaux de blocage, lors d'une nouvelle constatation d'un signal perturbant par le récepteur, il est possible de comparer le niveau de puissance mesuré avec l'ancien niveau mis en mémoire. De cette manière, le récepteur peut de nouveau ajuster de manière dynamique la plage de niveaux de puissance à bloquer.

Un ajustement dynamique de la plage de niveaux de puissance peut éventuellement également être mis en oeuvre pour la construction de la liste A de niveaux de puissance à ne pas bloquer.

Pour répondre à un éventuel risque de blocage intempestif d'un émetteur appairé, en particulier d'un émetteur nomade, une autre solution peut être mise en oeuvre : un émetteur adapté à commander spécifiquement un actionneur autonome peut comprendre des moyens pour ajuster le niveau de sa puissance d'émission.

Le principe est représenté à la figure 7. L'émetteur Tx1 émet différentes salves de plusieurs trames, Tr1, Tr2, Tr3, Tr4, au cours de l'émission de manière à assurer une réception par le récepteur Rx1. Ces différentes salves (ou trames) sont émises avec des niveaux de puissance d'émission différents. Le récepteur Rx1 se réveille de façon régulière et se rendort immédiatement lorsqu'il constate que le signal reçu a un niveau de puissance bloqué ou lorsqu'il ne reçoit aucun signal (pas d'émission ou intervalle inter-trame). Il ne réveille par exemple pas l'unité logique de traitement ULT1 lorsqu'une première trame Tr2 est reçue parce qu'il constate que le niveau de puissance mesuré est un niveau bloqué. Une nouvelle trame Tr3 reçue par le récepteur Rx1 provoque quant à elle le réveil de l'unité logique de traitement ULT1 et le traitement de cette trame par cette unité logique de traitement.

Alternativement, le niveau de puissance d'émission est ajusté de façon temporaire ou fixe, par l'utilisateur lui-même, au moyen d'un interrupteur par exemple. Si l'utilisateur constate qu'un signal ne semble pas être traité par le récepteur, il peut basculer l'interrupteur et retenter d'envoyer l'ordre de commande.

## Revendications

1. Procédé de communication par radiofréquences dans une installation domotique (1) comprenant au moins un émetteur d'ordres (Tx1, Tx2, Tx3) et au moins un récepteur d'ordres (A1) susceptible de basculer d'un mode actif à un mode sommeil et du mode sommeil au mode actif, comprenant les étapes suivantes :
- recevoir grâce à un récepteur radiofréquences (Rx1) d'un récepteur d'ordres (A1) un signal émis par un émetteur d'ordres,
- mesurer le niveau de puissance du signal reçu,
- comparer le niveau de puissance mesuré avec un niveau de puissance enregistré dans une mémoire (MEM) de puissances bloquées au niveau du récepteur d'ordres, ces puissances bloquées étant celles de signaux reçus et non-identifiables par le récepteur d'ordres,
- dans le cas où le niveau de puissance mesuré correspond au niveau de puissance enregistré en mémoire, ne pas traiter le signal reçu.

2. Procédé de communication selon la revendication 1, **caractérisé en ce qu'**il comprend les étapes préalables suivantes :
- recevoir grâce à un récepteur radiofréquences d'un récepteur d'ordres un signal émis par un émetteur d'ordres,
- mesurer le niveau de puissance du signal reçu,
- enregistrer ce niveau de puissance dans la mémoire de puissances bloquées au niveau du récepteur d'ordres si le signal n'est pas identifiable par le récepteur d'ordres.

3. Procédé de communication selon la revendication 1, **caractérisé en ce qu'**il comprend les étapes préalables suivantes :
- recevoir grâce à un récepteur radiofréquence d'un récepteur d'ordres un signal émis par un émetteur d'ordres,
- mesurer le niveau de puissance du signal reçu,
- si le signal n'est pas identifiable par le récepteur d'ordres, incrémenter un compteur associé au niveau de puissance,
- si la valeur du compteur dépasse un seuil prédéterminé, enregistrer ce niveau de puissance dans la mémoire de puissances bloquées.

4. Procédé de communication selon la revendication précédente, **caractérisé en ce que** le compteur associé à un niveau de puissance est réinitialisé après qu'un signal de ce niveau de puissance correctement identifié a été reçu par le récepteur d'ordres.

5. Procédé de communication selon l'une des revendications 2 à 4, **caractérisé en ce qu'**un niveau de puissance enregistré dans la mémoire de puissances bloquées est effacé après qu'un signal de ce niveau de puissance correctement identifié a été reçu par le récepteur d'ordres.

6. Procédé de communication selon l'une des revendications précédentes, **caractérisé en ce qu'**un signal est non identifiable par le récepteur d'ordres si sa trame n'est pas cohérente pour le récepteur d'ordres ou s'il n'est pas adressé à ce récepteur.

7. Procédé de communication selon l'une des revendications précédentes, **caractérisé en ce qu'**il comprend les étapes suivantes :
- déterminer l'identité de l'émetteur d'ordres ayant émis le signal,
- si le niveau de puissance de cet émetteur d'ordres est enregistré dans la mémoire de puissances bloquées, modifier cet enregistrement en fonction des mesures de puissances des signaux émis par cet émetteur d'ordres.

8. Procédé de communication selon l'une des revendications 1 à 6, **caractérisé en ce qu'**il comprend une étape de détection d'une modification au cours du temps d'une puissance d'un signal reçu par le récepteur d'ordres et émis par un émetteur identifié et une étape de modification au cours du temps d'un enregistrement d'un niveau de puissance dans la mémoire de puissance bloquée de manière à ce que le récepteur d'ordres continue à ne pas traiter les signaux émis par cet émetteur identifié malgré la modification du niveau de puissance des signaux émis par cet émetteur identifié.

9. Récepteur d'ordres (A1) par radiofréquences, **caractérisé en ce qu'**il comprend des moyens matériels (Rx1, ULT1, CLK, MEM, Ci, MT) et logiciels pour mettre en oeuvre le procédé de communication selon l'une des revendications précédentes.

10. Installation domotique (1) comprenant au moins un récepteur d'ordres selon la revendication 9 et au moins un émetteur d'ordres comprenant des moyens pour faire varier sa puissance d'émission.

## Claims

1. A method of communicating by radio frequencies in a home-automation installation (1) comprising at least one command transmitter (Tx1, Tx2, Tx3) and at least one command receiver (A1) capable of switching from an active mode to a sleeping mode and from the sleeping mode to the active mode, comprising the following steps:
- receiving by means of a radiofrequency receiver (Rx1) of a command receiver (A1) a signal transmitted by a command transmitter,
- measuring the power level of the signal received,
- comparing the measured power level with a power level recorded in a memory (MEM) of powers that are blocked at the level of the command receiver, these blocked powers being those of signals that are received but not identified by the command receiver,
- in the case where the measured power level corresponds to the power level recorded in memory, not processing the signal received.

2. The communication method as claimed in claim 1, **characterized in that** it comprises the following prior steps:
- receiving by means of a radiofrequency receiver of a command receiver a signal transmitted by a command transmitter,
- measuring the power level of the signal received,
- recording this power level in the memory of powers that are blocked at the level of the command receiver if the signal is not identifiable by the command receiver.

3. The communication method as claimed in claim 1, **characterized in that** it comprises the following prior steps:
- receiving by means of a radiofrequency receiver of a command receiver a signal transmitted by a command transmitter,
- measuring the power level of the signal received,
- if the signal is not identifiable by the command receiver, incrementing a counter associated with the power level,
- if the value of the counter exceeds a predetermined threshold, recording this power level in the memory of blocked powers.

4. The communication method as claimed in the preceding claim, **characterized in that** the counter associated with a power level is reinitialized after the command receiver has received a correctly identified signal of this power level.

5. The communication method as claimed in one of claims 2 to 4, **characterized in that** a power level recorded in the memory of blocked powers is erased after the command receiver has received a correctly identified signal of this power level.

6. The communication method as claimed in one of the preceding claims, **characterized in that** a signal is non-identifiable by the command receiver if its frame is not consistent for the command receiver or if it is not addressed to this receiver.

7. The communication method as claimed in one of the preceding claims, **characterized in that** it comprises the following steps:
- determining the identity of the command transmitter that transmitted the signal,
- if the power level of this command transmitter is recorded in the memory of blocked powers, modifying this record as a function of the measurements of power of the signals transmitted by this command transmitter.

8. The communication method as claimed in one of claims 1 to 6, **characterized in that** it comprises a step of detecting a modification in the course of time of a power of a signal received by the command receiver and transmitted by an identified transmitter and a step of modifying in the course of time a record of a power level in the blocked power memory in such a way that the command receiver continues not to process the signals transmitted by this identified transmitter despite the modification of the power level of the signals transmitted by this identified transmitter.

9. A radiofrequency command receiver (A1), **characterized in that** it comprises hardware means (Rx1, ULT1, CLK, MEM, Ci, MT) and software means for implementing the communication method as claimed in one of the preceding claims.

10. A home-automation installation (1) comprising at least one command receiver as claimed in claim 9 and at least one command transmitter comprising means for varying its transmission power.

## Patentansprüche

1. Verfahren zur Kommunikation über Radio-Funkfrequenzen in einer haustechnischen Anlage (1), welche mindestens einen Befehlssender (Ix1, Tx2, Tx3) und mindestens einen Befehlsempfänger (A1) enthält, der von einem Aktivmodus in einen Ruhemodus und vom Ruhemodus in den Aktivmodus umschalten kann, wobei das Verfahren die folgenden Schritte aufweist:
- Empfang eines von einem Befehlssender übermittelten Signals dank eines Radiofrequenzempfängers (Rx1) in einem Befehlsempfänger (A1),
- Messung des Betrags der Intensität des empfangenen Signals,
- Vergleich der gemessenen Signalintensität mit einer in einem Speicher (MEM) für Intensitätswerte, die im Befehlsempfänger blockiert sind, abgelegten Signalintensität, wobei diese blockierten Signalintensitätswerte diejenigen von empfangenen, vom Befehlsempfänger nicht identifizierbaren Signalen sind, und
- im Fall einer Übereinstimmung des gemessenen Intensitätsbetrags mit dem im Speicher abgelegten Intensitätswert: keine Verarbeitung des empfangenen Signals.

2. Verfahren zur Kommunikation nach Anspruch 1, **dadurch gekennzeichnet, dass** es die folgenden vorgängigen Schritte aufweist:
- Empfang eines von einem Befehlssender übermittelten Signals dank eines Radiofrequenzempfängers eines Befehlsempfängers,
- Messung des Betrags der Intensität des empfangenen Signals,
- Speicherung dieser Signalintensität in einem Speicher für blockierte Signalintensitäten im Befehlsempfänger, wenn das Signal vom Befehlsempfänger nicht identifizierbar ist.

3. Verfahren zur Kommunikation nach Anspruch 1, **dadurch gekennzeichnet, dass** es die folgenden vorgängigen Verfahrensschritte aufweist:
- Empfang eines von einem Befehlscenter übermittelten Signals dank eines Radiofrequenzempfängers eines Befehlsempfängers,
- Messung des Betrags der Intensität des empfangenen Signals,
- Weiterschalten eines Zählers, der der Signalintensität zugeordnet ist, wenn das Signal vom Befehlsempfänger nicht identifizierbar ist,
- Speicherung dieses Betrags der Signalintensität im Speicher für blockierte Signalintensitäten, wenn der Wert im Zähler einen vorbestimmten Schwellenwert übersteigt.

4. Verfahren zur Kommunikation nach vorstehendem Anspruch, **dadurch gekennzeichnet, dass** der Zähler, der einem Niveau der Signalintensität zugeordnet ist, neu initialisiert wird, nachdem ein Signal mit diesem Intensitätsniveau, das korrekt identifiziert wurde, vom Befehlsempfänger empfangen wurde.

5. Verfahren zur Kommunikation nach einem der Ansprüche 2 bis 4, **dadurch gekennzeichnet, dass** ein Signalintensitätsniveau, welches im Speicher für blockierte Signalintensitäten abgelegt ist, gelöscht wird, nachdem ein Signal mit diesem Intensitätsniveau, welches korrekt identifiziert wurde, vom Befehlsempfänger erhalten wurde.

6. Verfahren zur Kommunikation nach einem der vorstehenden Ansprüche, **dadurch gekennzeichnet, dass** ein Signal vom Befehlsempfänger nicht identifizierbar ist, wenn sein Raster für den Befehlsempfänger inkohärent ist oder wenn es an diesen Empfänger nicht adressiert ist.

7. Verfahren zur Kommunikation nach einem der vorstehenden Ansprüche, **dadurch gekennzeichnet, dass** es die folgenden Schritte aufweist:
- Bestimmung der Identität des Befehlssenders, welcher das Signal übermittelt hat,
- wenn das Niveau der Signalintensität dieses Befehlssenders im Speicher für blockierte Signalintensitätswerte gespeichert ist: Änderung dieses Speicherwerts in Abhängigkeit von den Messungen der Intensitätswerte der Signale, welche dieser Befehlssender übermittelt.

8. Verfahren zur Kommunikation nach einem der Ansprüche 1 bis 6, **dadurch gekennzeichnet, dass** es als zusätzlichen Schritt die Ermittlung einer zeitlichen Änderung der Intensität eines Signals aufweist, welches vom Befehlsempfänger empfangen und von einem identifizierten Sender übermittelt wurde, sowie einen Schritt zur zeitlichen Änderung der Speicherung eines Intensitätsniveaus im Speicher für blockierte Signalintensitätswerte, derart, dass der Befehlsempfänger damit fortfährt, die Signale nicht zu verarbeiten, welche von diesem identifizierten Sender übermittelt werden, trotz der Änderung des Signalintensitätsniveaus der Signale, welche von diesem identifizierten Sender übermittelt werden.

9. Befehlsempfänger (A1) über Radiofrequenzen, **dadurch gekennzeichnet, dass** er Hardware (RX1, ULT 1, CLK, MEM, CI, MT) und Software zur Ausführung des Verfahrens zur Kommunikation nach einem der vorstehenden Ansprüche aufweist.

10. Haustechnische Anlage (1), welche mindestens einen Befehlsempfänger nach Anspruch 9 und mindestens einen Befehlssender aufweist, welcher Mittel zur Änderung seiner Sendeleistung enthält.
